# EUROPEAN PATENT SPECIFICATION

(11) **EP 3 735 028 B1**
(45) Date of publication and mention of the grant of the patent: **07.08.2024**
(21) Application number: 19741929.4
(22) Date of filing: 21.01.2019
(51) Int. Cl.: H04W 8/24, H04W 8/04, H04W 72/51

(54) **COMMUNICATION METHOD FOR DETERMINISTIC TRANSMISSION AND RELATED APPARATUS**
KOMMUNIKATIONSVERFAHREN ZUR DETERMINISTISCHEN ÜBERTRAGUNG UND ZUGEHÖRIGE VORRICHTUNG
PROCÉDÉ DE COMMUNICATION POUR TRANSMISSION DÉTERMINISTE ET APPAREIL ASSOCIÉ

(30) Priority: 22.01.2018 CN 201810060439
(43) Date of publication of application: 04.11.2020
(73) Proprietor: Huawei Technologies Co., Ltd., Longgang Shenzhen, Guangdong 518129 (CN)
(72) Inventor: SU, Qi, Shenzhen, Guangdong 518129 (CN); WANG, Yan, Shenzhen, Guangdong 518129 (CN); LI, Yexing, Shenzhen, Guangdong 518129 (CN)
(74) Representative: Körber, Martin Hans
(86) International application number: PCT/CN2019/072530
(87) International publication number: WO 2019/141273

(56) References cited:
- EP-A1- 3 205 058
- CN-A- 101 267 658
- CN-A- 102 026 301
- CN-A- 102 244 891
- CN-A- 106 507 492
- US-A1- 2017 339 554
- SAMSUNG: "QoS parameter - Packet Delay Budget", vol. SA WG2, no. Vienna, Austria; 20160711 - 20160715, 10 July 2016 (2016-07-10), XP051118286, Retrieved from the Internet <URL:http://www.3gpp.org/ftp/Meetings_3GPP_SYNC/SA2/Docs/> [retrieved on 20160710]
- HUAWEI ET AL: "Use case for Industry Communication with stable latency needs", vol. SA WG1, no. Reno, USA; 20171125 - 20171201, 4 December 2017 (2017-12-04), XP051378999, Retrieved from the Internet <URL:http://www.3gpp.org/ftp/tsg%5Fsa/WG1%5FServ/TSGS1%5F80%5FReno/docs/> [retrieved on 20171204]
- HUAWEI: "UTRA inter Frequency HO to CSG Cell or Hybrid Cell", 3GPP TSG-RAN WG2 MEETING #67BIS, R2-095537, 12 October 2009 (2009-10-12) - 16 October 2009 (2009-10-16), XP050390077

## Description

(excised)

### TECHNICAL FIELD

This application relates to the communications field, and more specifically, to a communication method for deterministic transmission, an access network device, a terminal device, and a computer-readable storage medium.

### BACKGROUND

In a fixed network, represented by a time-sensitive network (time-sensitive networking, TSN), a solution for implementing deterministic transmission is relatively mature.

Nodes of the TSN include a centralized network configuration (centralized network configuration, CNC) node, a packet transmitter (talker), a packet receiver (listener), and a switch between the talker and the listener.

The CNC node delivers related configuration information to the talker and the switch based on a service requirement, and configures several transmission channels between the talker and the listener. These transmission channels are referred to as TSN channels (stream).

For each TSN stream, the CNC node configures, in the talker, a maximum packet sending frequency supported by the TSN stream and a corresponding stream label. The talker transmits a packet in periods divided by the maximum packet sending frequency. If no packet exists in some periods, the packet may not be sent, but only one packet may be sent in each period.

Because a frequency at which the talker sends the packets is determined, and for each switch, a scheduling time obtained by a sending queue to which the packet is allocated is determined, a queue length of the packet on each node is limited. In addition, time in which the packet passes each node can be controlled within a range. Therefore, end-to-end delays and delay jitters accumulated by all nodes may be controlled within a range, that is, end-to-end determinism is implemented.

In a 5G communications network, in some application scenarios, for example, an ultra reliable and low latency (ultra reliable and low latency, URLLC) application scenario, the end-to-end deterministic transmission also needs to be implemented. How to implement deterministic transmission of a packet in the 5G communications network is a problem that urgently needs to be resolved.

EP 3 205 058 discloses a network communication system that includes data sources and of switches. Each of the data sources and switches is interconnected by a packet-switched network, and is synchronized to a common clock. The system also includes a network controller that maintains records of network characteristics including a transmission delay for each of the data sources and switches, and a transmission delay for links in the packet-switched network in order to optimize path and schedule of packets to meet jitter requirements.

### SUMMARY

This application provides a communication method for deterministic transmission, a terminal device, a control network element, and a computer-readable storage medium, to help implement deterministic transmission of a packet in a communications network. The invention is defined in the independent claims. Advantageous features are defined in the dependent claims.

According to a first aspect, this application provides a communication method for deterministic transmission. The communication method includes: determining, by a terminal device, first indication information, where the first indication information is used to indicate whether the terminal device has a capability of controlling a packet sending frequency; and sending, by the terminal device, the first indication information to a control network element.

In the communication method, the terminal device reports, to the control network element, whether the terminal device has the capability of controlling the packet sending frequency, so that the control network element can select, based on whether the terminal device has the capability, to send a packet sending frequency of a flow to the terminal device or an access network device. In this way, when the terminal device does not have the capability, the access network device may control the packet sending frequency, thereby helping implement deterministic transmission of a packet.

In a possible implementation, the communication method further includes: receiving, by the terminal device, second indication information from the control network element, wherein the sending, by the terminal device, the first indication information to a control network element includes: sending, by the terminal device, the first indication information to the control network element based on the second indication information.

In this implementation, the terminal device may report, to the control network element only when the control network element has a requirement, whether the terminal device has the capability of controlling the packet sending frequency. This helps reduce signaling overheads when the control network element does not have a requirement of learning of whether the terminal device has the capability.

When the first indication information is used to indicate that the terminal device has the capability of controlling the packet sending frequency, the communication method further includes: receiving, by the terminal device, a packet sending frequency of a flow from the control network element or an access network device.

The communication method further includes: sending, by the terminal device, an uplink packet of the flow to the access network device based on the packet sending frequency of the flow.

When the terminal device has the capability of controlling the packet sending frequency, the terminal device can control a sending frequency of a packet of the flow based on the packet sending frequency of the flow, thereby helping implement deterministic transmission of the packet.

According to a second aspect, this application provides a communication method for deterministic transmission. The communication method includes: receiving, by a control network element, first indication information from a terminal device, where the first indication information is used to indicate whether the terminal device has a capability of controlling a packet sending frequency; and when the first indication information indicates that the terminal device does not have the capability of controlling the packet sending frequency, sending, by the control network element, a packet sending frequency of a flow to an access network device.

In the communication method, when determining, based on the first indication information reported by the terminal device, that the terminal device does not have the capability of controlling the packet sending frequency, the control network element may send the packet sending frequency of the flow to the access network device, so that the access network device controls the packet sending frequency, thereby helping implement deterministic transmission of a packet.

In a possible implementation, before the receiving, by a control network element, first indication information from a terminal device, the communication method further includes: sending, by the control network element, second indication information to the terminal device, where the second indication information is used to trigger sending of the first indication information.

In this implementation, only when the control network element has a requirement, the control network element instructs the terminal device to report whether the terminal device has the capability of controlling the packet sending frequency. This helps reduce signaling overheads when the control network element does not have a requirement of learning of whether the terminal device has the capability.

When the first indication information indicates that the terminal device has the capability of controlling the packet sending frequency, the communication method further includes: sending, by the control network element, the packet sending frequency of the flow to the terminal device.

In this implementation, when the terminal device has the capability of controlling the packet sending frequency, the control network element may send the packet sending frequency of the flow to the terminal device, so that the terminal device can send a packet based on the packet sending frequency, thereby helping implement deterministic transmission of the packet.

In a possible implementation, when the first indication information indicates that the terminal device has the capability of controlling the packet sending frequency, the communication method further includes: sending, by the control network element, third indication information to the access network device, where the third indication information is used to instruct the access network device to send the packet sending frequency of the flow to the terminal device.

When the first indication information indicates that the terminal device does not have the capability of controlling the packet sending frequency, the communication method further includes: sending, by the control network element, fourth indication information to the access network device, where the fourth indication information is used to instruct the access network device to send an uplink packet of the flow based on the packet sending frequency of the flow.

According to a fourth aspect, this application provides a terminal device. The terminal device includes a module configured to perform the communication method according to the first aspect or any possible implementation of the first aspect. The module included in the terminal device may be implemented in a software and/or hardware manner.

According to a fifth aspect, this application provides a control network element. The control network element may include a module configured to perform the communication method according to the second aspect or any possible implementation of the second aspect. The module included in the control network element may be implemented in a software and/or hardware manner.

(excised)

According to a seventh aspect, this application provides a terminal device. The terminal device includes a processor and a transceiver. The processor is configured to execute a program. When the processor executes code, the processor and the transceiver implement the communication method according to the first aspect or any possible implementation of the first aspect.

Optionally, the terminal device may further include a memory. The memory is configured to store a program and data.

According to an eighth aspect, this application provides a control network element. The control network element includes a processor and a transceiver. The processor is configured to execute a program. When the processor executes code, the processor and the transceiver implement the communication method according to the second aspect or any possible implementation of the second aspect.

Optionally, the control network element may further include a memory. The memory is configured to store a program and data.

(excised)

Optionally, the access network device may further include a memory. The memory is configured to store a program and data.

According to a tenth aspect, this application provides a computer-readable storage medium. The computer-readable storage medium stores program code used to be executed by a terminal device, a control network element, or an access network device. The program code includes an instruction used to perform the communication method in the first aspect, or the second aspect.

-- **[0044]** (excised)

### BRIEF DESCRIPTION OF DRAWINGS

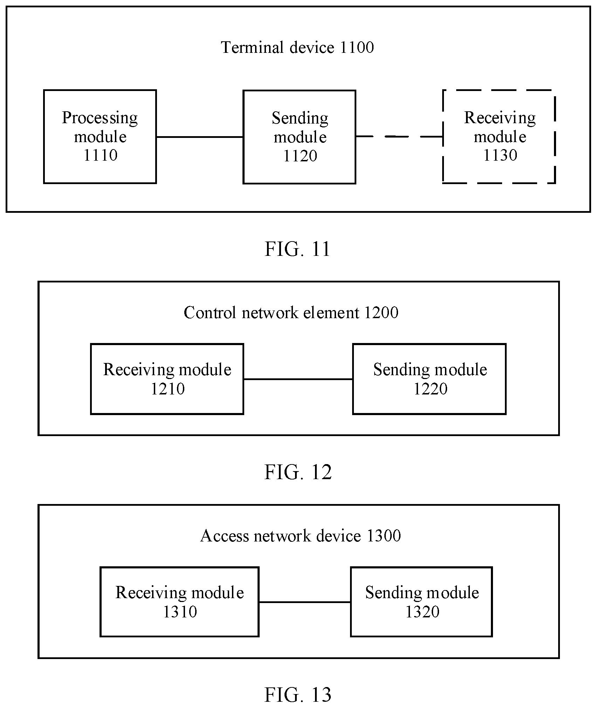

The embodiments in the following reference to Fig. 13 is not part of the invention, but an illustrative example necessary for understanding the invention.
FIG. 1 is a schematic architectural diagram of a communications system to which a communication method according to an embodiment of this application may be applied;
FIG. 2 is a schematic flowchart of a communication method according to an embodiment of this application;
FIG. 3 is a schematic flowchart of controlling a packet sending frequency by an AN device in a communication method according to an embodiment of this application;
FIG. 4 is a schematic flowchart of a communication method according to another embodiment of this application;
FIG. 5 is a schematic flowchart of a communication method according to another embodiment of this application;
FIG. 6 is a schematic flowchart of a communication method according to another embodiment of this application;
FIG. 7 is a schematic flowchart of a communication method according to another embodiment of this application;
FIG. 8 is a schematic flowchart of a communication method according to another embodiment of this application;
FIG. 9 is a schematic flowchart of a communication method according to another embodiment of this application;
FIG. 10 is a schematic flowchart of a communication method according to another embodiment of this application;
FIG. 11 is a schematic structural diagram of a terminal device according to an embodiment of this application;
FIG. 12 is a schematic structural diagram of a control network element according to an embodiment of this application;
FIG. 13 is a schematic structural diagram of an access network device according to an embodiment of this application;
FIG. 14 is a schematic structural diagram of a communications apparatus according to another embodiment of this application; and
FIG. 15 is a schematic flowchart of a communication method according to another embodiment of this application.

### DESCRIPTION OF EMBODIMENTS

The following describes technical solutions of this application with reference to accompanying drawings.

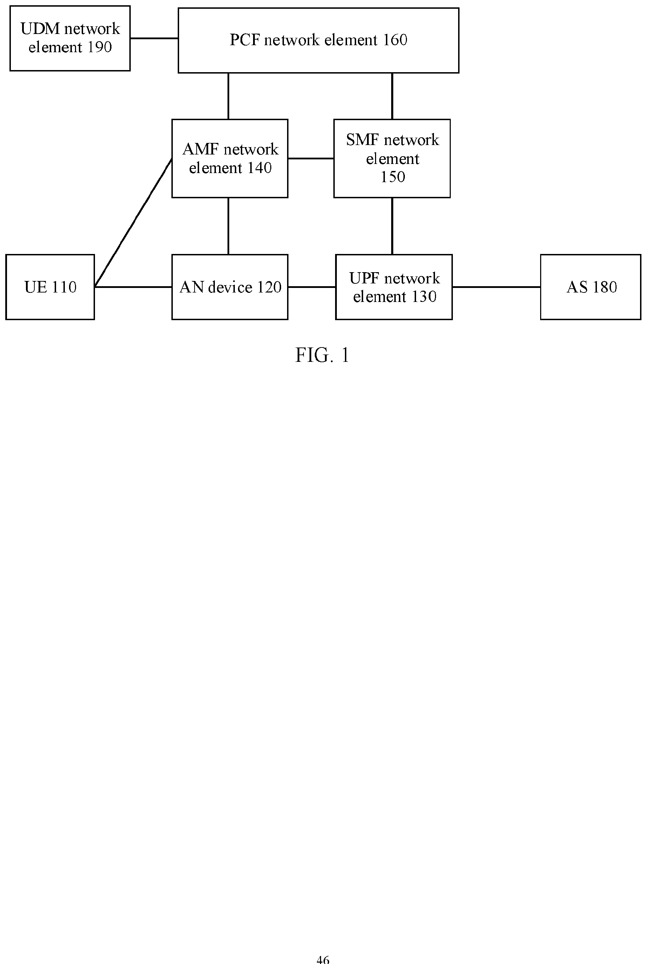

As shown in FIG. 1, a communications system to which a communication method in embodiments of this application may be applied may include user equipment (user equipment, UE) 110, an access network (access network, AN) device 120, a user plane function (user plane function, UPF) network element 130, an access and mobility management function (access and mobility management function, AMF) network element 140, a session management function (session management function, SMF) network element 150, a policy control function (policy control function, PCF) network element 160, an application server (application service, AS) 180, and a unified data management (unified data management, UDM) network element 190.

The UE may also be referred to as a terminal device. The terminal device may communicate with one or more core networks (core network, CN) by using the AN device. The terminal device may be referred to as an access terminal, a terminal, a subscriber unit, a subscriber station, a mobile station, a mobile console, a remote station, a remote terminal, a mobile device, a user terminal, a radio network device, a user agent or a user apparatus. The terminal may be a cellular phone, a cordless phone, a session initiation protocol (session initiation protocol, SIP) phone, a wireless local loop (wireless localloop, WLL) station, a personal digital assistant (personal digital assistant, PDA), a handheld device having a wireless communication function, a computing device, another processing device connected to a wireless modem, a vehicle-mounted device, a wearable device, or a terminal device in Internet of Vehicles, any forms of terminal device in a future network, and the like.

The AN device may be a radio access network (radio access network, RAN) device. An example of the RAN device is a base station (base station, BS).

The base station may also be referred to as a base station device, and is a device for connecting a terminal to a wireless network, and includes but is not limited to a transmission reception point (transmission reception point, TRP), a 5G NodeB (gNB), an evolved NodeB (evolved node B, eNB), a radio network controller (radio network controller, RNC), a NodeB (node B, NB), a base station controller (base station controller, BSC), a base transceiver station (base transceiver station, BTS), a home base station (for example, home evolved nodeB, or home node B, HNB), a baseband unit (base band unit, BBU), a Wi-Fi access point (access point, AP), a small cell device (pico), or the like.

It should be understood that a specific type of the base station is not limited in this specification. In systems using different radio access technologies, a device having a base station function may be named differently. For ease of description, in all the embodiments of this application, all the foregoing apparatuses that provide a wireless communication function for the terminal are collectively referred to as a base station.

The UPF network element has functions such as packet forwarding, encapsulation, and statistics collection of the terminal device.

The AMF network element is responsible for access and mobility management of the terminal device. For example, the access and mobility management includes mobility status management, temporary identifier allocation for the terminal device, and terminal authentication and authorization.

The SMF network element is responsible for selection and reselection of the UPF network element, assignment of an internet protocol (internet protocol, IP) address, and the like, and may further be responsible for session establishment, modification, release, and the like.

The PCF network element is configured to implement functions such as supporting a unified policy framework to govern a network behavior, providing a policy rule that needs to be executed for a control plane, and obtaining subscription information related to policy decision.

The AS is a device that provides an application service for the UE.

The UDM network element is responsible for storing subscription data and managing the subscription data. When the subscription data is modified, the UDM network element is responsible for notifying a corresponding network element, for example, notifying a PCF network element.

It should be understood that the embodiments of this application are not limited to the system architecture shown in FIG. 1. For example, the communications system to which the communication method in the embodiments of this application may be applied may include more or fewer network elements or devices. The device or the network element in FIG. 1 may be hardware, or may be software obtained through function division, or a combination thereof. The device or network element in FIG. 1 may communicate with each other by using another device or network element.

In the communications system shown in FIG. 1, in some scenarios between the UE 110 and the application server 180 (for example, when a URLLC service is implemented between the UE 110 and the application server 180), deterministic transmission from the UE 110 to the application server 180 needs to be ensured. The deterministic transmission from the UE 110 to the application server 180 may refer to that the delay and the delay jitter of a packet sent by the UE 110 to the application server 180 may be controlled within a specified interval. A flow to which the packet belongs may be a quality of service (quality of service, QoS) flow. The QoS flow may be referred to as a QoS flow having a deterministic transmission requirement.

Therefore, this application provides a communication method that helps implement deterministic transmission from the UE 110 to the application server 180.

A main idea of the communication method provided in this application includes: a terminal device sends first indication information to a control network element, where the first indication information is used to indicate that the terminal device has a capability of controlling a packet sending frequency or is used to indicate that the terminal device does not have the capability of controlling the packet sending frequency; the control network element sends a packet sending frequency of a flow to the terminal device or an access network device based on the first indication information; and the terminal device or the access network device sends an uplink packet of the flow based on the packet sending frequency of the flow, to implement deterministic transmission of the uplink packet.

For example, when the UE 110 does not have the capability of controlling the packet sending frequency, the UE 110 sends, to the control network element, the first indication information used to indicate that the UE 110 does not have the capability of controlling the packet sending frequency. After receiving the first indication information, the control network element sends the packet sending frequency of the flow to the AN device 120, and the AN device 120 sends the uplink packet of the flow based on the packet sending frequency of the flow. In other words, the AN device 120 controls the packet sending frequency of the uplink packet of the flow, to implement deterministic transmission of the uplink packet.

For example, when the UE 110 has the capability of controlling the packet sending frequency, the UE 110 sends, to the control network element, the first indication information used to indicate that the UE 110 has the capability of controlling the packet sending frequency. After receiving the first indication information, the control network element sends the packet sending frequency of the flow to the UE 110, and the UE 110 sends the uplink packet of the flow based on the packet sending frequency of the flow. In other words, the UE 110 controls the packet sending frequency of the uplink packet of the flow, to implement deterministic transmission of the uplink packet.

In the communication method provided in this application, optionally, the terminal device may send, to the control network element only when the terminal device does not have the capability of controlling the packet sending frequency, the first indication information used to indicate that the terminal device does not have the capability of controlling the packet sending frequency. When the terminal device has the capability of controlling the packet sending frequency, the terminal device may not send, to the control network element, indication information used to indicate that the terminal device has the capability of controlling the packet sending frequency.

In this design manner, if the control network element receives the first indication information from the terminal device, the control network element may send the packet sending frequency of the flow to the access network device, and the access network device controls the packet sending frequency of the uplink packet of the flow. If the control network element does not receive the first indication information from the terminal device, the control network element may consider that the terminal device has the capability of controlling the packet sending frequency, and the control network element sends the packet sending frequency of the flow to the terminal device, so that the terminal device controls the packet sending frequency of the uplink packet of the flow.

Alternatively, the terminal device may send, to the control network element only when the terminal device has the capability of controlling the packet sending frequency, the first indication information used to indicate that the terminal device has the capability of controlling the packet sending frequency. When the terminal device does not have the capability of controlling the packet sending frequency, the terminal device may not send, to the control network element, indication information used to indicate that the terminal device does not have the capability of controlling the packet sending frequency.

In this design manner, if the control network element receives the first indication information from the terminal device, the control network element may send the packet sending frequency of the flow to the terminal device, and the terminal device controls the packet sending frequency of the uplink packet of the flow. If the control network element does not receive the first indication information from the terminal device, the control network element may consider that the terminal device does not have the capability of controlling the packet sending frequency, and the control network element sends the packet sending frequency of the flow to the access network device, so that the access network device controls the packet sending frequency of the uplink packet of the flow.

That the first indication information is used to indicate that the terminal device has the capability of controlling the packet sending frequency or is used to indicate that the terminal device does not have the capability of controlling the packet sending frequency may be understood that the first indication information may have different information values, and the different information values indicate different meanings. For example, when the UE 110 has the capability of controlling the packet sending frequency, the first indication information has a first value; and when the UE 110 does not have the capability of controlling the packet sending frequency, the first indication information has a second value.

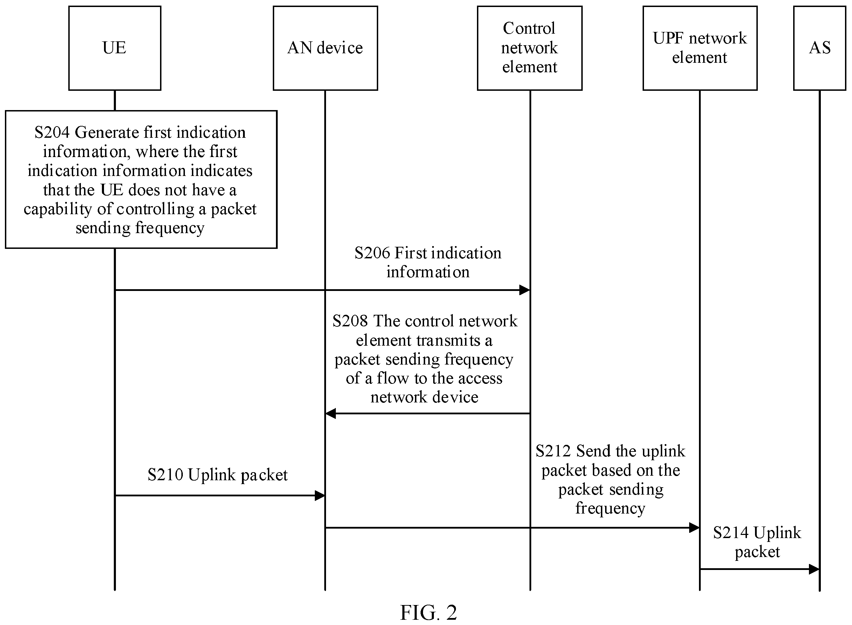

When the terminal device does not have the capability of controlling the packet sending frequency, a schematic flowchart of a communication method according to an embodiment of this application is shown in FIG. 2. The communication method shown in FIG. 2 may include S204, S206, S208, S210, S212, and S214.

It should be understood that, although steps or operations of the communication method are shown in FIG. 2, the steps or operations are only examples, and other operations or variations of the operations in FIG. 2 may also be performed in this embodiment of this application. In addition, the steps in FIG. 2 may be performed in a sequence different from that presented in FIG. 2, and possibly not all operations in FIG. 2 need to be performed.

S204. UE 110 generates first indication information, where the first indication information indicates that the UE 110 does not have a capability of controlling a packet sending frequency.

For example, when the UE 110 does not have the capability of controlling the packet sending frequency, the UE 110 generates the first indication information, where the first indication information indicates that the UE 110 does not have the capability of controlling the packet sending frequency.

That the UE 110 does not have the capability of controlling the packet sending frequency refers to that the UE 110 cannot periodically send a packet to the AN device 120 based on a specified frequency.

S206. The UE 110 sends the first indication information to a control network element. Correspondingly, the control network element receives the first indication information from the UE 110. In other words, the UE 110 reports, to the control network element, that the UE 110 does not have the capability of controlling the packet sending frequency.

The control network element includes an AMF network element 140 or an SMF network element 150.

Optionally, the UE 110 may add a new information element to existing signaling as the first indication information. For example, when initiating a packet data unit session establishment request (packet data unit session establishment request, PDU Session Establishment Request) message to the AMF network element, the UE 110 may add an information element to the PDU session establishment request message as the first indication information. Alternatively, the UE 110 may add the first indication information to newly added signaling.

S208. The control network element sends a packet sending frequency of a flow to the AN device 120. Correspondingly, the AN device 120 receives the packet sending frequency from the control network element. The flow may be a QoS flow.

In this case, the UE 110 may be referred to as a first terminal device, the flow may be referred to as a first flow, and the packet sending frequency may be referred to as a first packet sending frequency.

When the control network element is the AMF network element 140, an implementation in which the control network element sends the packet sending frequency of the flow to the AN device 120 may include: After determining that an uplink flow having a deterministic transmission requirement exists in the PDU session requested by the UE 110, the SMF network element 150 sends, to the AMF network element 140, a packet sending frequency of the flow having the deterministic transmission requirement and the first indication information; and after the AMF network element 140 receives the packet sending frequency of the flow having the deterministic transmission requirement and the first indication information, because the first indication information indicates that the UE 120 does not have the capability of controlling the packet sending frequency, the AMF network element 140 sends, to the AN device 120, the packet sending frequency of the flow having the deterministic transmission requirement.

When the control network element is the SMF network element 150, an implementation in which the control network element sends the packet sending frequency of the flow to the AN device 120 may include that the SMF network element 150 sends the packet sending frequency of the flow to the AN device 120 by using the AMF network element 140. For example, after determining that the uplink flow having the deterministic transmission requirement exists in the PDU session requested by the UE 110, the SMF network element 150 may send, to the AMF network element 140, the packet sending frequency of the flow having the deterministic transmission requirement and fifth indication information, where the fifth indication information is used to indicate that the packet sending frequency of the flow is sent to the AN device 120 for use. The AMF network element 140 sends the packet sending frequency of the flow to the AN device 120 based on an indication of the fifth indication information.

Optionally, when sending the packet sending frequency of the flow to the AN device 120, the control network element may further send identification information of the flow. When the flow is the QoS flow, the identification information may be a QoS flow identifier (QoS flow identity, QFI).

S210. The UE 110 sends an uplink packet to the AN device 120. Correspondingly, the AN device 120 receives the uplink packet from the UE 110. The uplink packet may be referred to as a first uplink packet.

For example, after the PDU session is successfully established, the UE 110 sends the uplink packet to the AN device 120.

S212. The AN device 120 sends the uplink packet based on the packet sending frequency of the flow to which the uplink packet belongs. Correspondingly, the UPF network element 130 receives the uplink packet.

That the AN device 120 sends the uplink packet based on the packet sending frequency of the flow to which the uplink packet belongs may include that the AN device 120 sends, based on the packet sending frequency, the uplink packet to a queue of a network layer or a media access control (media access control, MAC) layer of the AN device 120; and sends the uplink packet in the queue of the network layer or the media access control layer to the UPF network element 130.

In the AN device 120, optionally, data packets of uplink packets of different flows may be sent to a same queue of the network layer or the media access control layer based on packet sending frequencies respectively corresponding to the data packets, provided that a sum of packet sending frequencies of the flows is less than or equal to a packet sending frequency of the queue. In this way, different flows may be sent to the UPF network element 130 by using the same queue of the network layer or the media access control layer, thereby helping alleviate impact of deterministic transmission between flows.

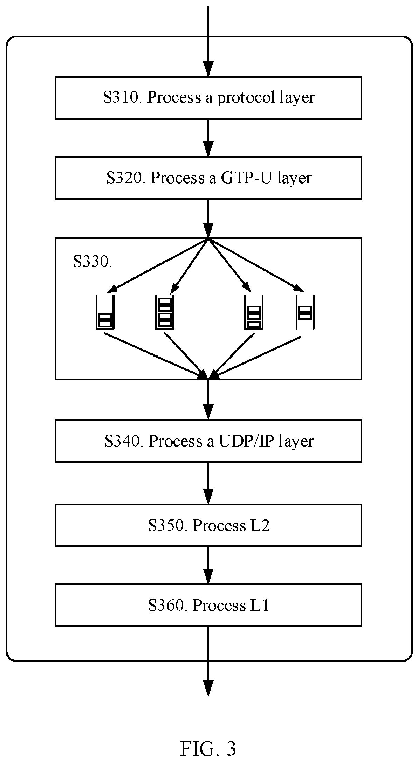

An implementation in which the AN device 120 sends the uplink packet based on the packet sending frequency of the flow to which the uplink packet belongs is further described in FIG. 3.

S214. The UPF network element 130 sends the uplink packet to an AS 180. Correspondingly, the AS 180 receives the uplink packet from the UPF network element, to implement deterministic transmission.

For example, a TSN may be implemented between the UPF network element 130 and the AS 180. The UPF network element 130 is used as a transmit end of the TSN, and the AS 180 is used as a receive end of the TSN.

It should be understood that another UPF network element may be included between the UPF network element 130 and the AS 180. In this case, the TSN may be established between the UPR network element 130 and another UPF network element, and between the another UPF network element and the AS 180, to implement deterministic transmission.

As shown in FIG. 3, an implementation in which the AN device 120 sends the uplink packet based on the packet sending frequency of the flow to which the uplink packet belongs includes the following steps.

S310. The AN device 120 processes a protocol layer.

For example, after receiving the uplink packet from the UE 110 by using an air interface, the AN device 120 processes the uplink packet by using a protocol layer (protocol layer) on the AN device 120, to restore the uplink packet to a data packet of a PDU layer, and sends the data packet to a general packet radio system tunneling protocol-user plane (GPRS tunneling protocol-user plane, GTP-U) layer of the AN device 120.

S320. The AN device 120 processes the GTP-U layer. For example, the GTP-U layer of the AN device 120 adds a GTP-U header to the data packet.

S330. The AN device 120 determines whether the QFI received by the AN device 120 in S230 includes a QFI of the first uplink packet. If the QFI received by the AN device 120 in S230 includes the QFI of the first uplink packet, the AN device 120 allocates a data packet corresponding to the uplink packet to a queue that is corresponding to the QoS flow to which the uplink packet belongs and that is on the AN device 120, and sends, based on the packet sending frequency of the QoS flow, the data packet in the queue to a user datagram protocol/internet protocol (user datagram protocol/internet protocol, UDP/IP) layer of the AN device 120. If the QFI received by the AN device 120 in S230 does not include the QFI of the first uplink packet, the AN device 120 sends the data packet of the uplink packet to a default queue (for example, the last queue in S330), and sends the data packet in the default queue to the UDP/IP layer.

S340. The AN device 120 processes the UDP/IP layer.

The UDP/IP layer of the AN device 120 adds a UDU header and an IP header into the received data packet, and sends the data packet to a layer (layer, L) 2 of the AN device 120.

S350. The AN device 120 processes L2.

The AN device 120 completes, in L2, related operations defined in the TSN for implementing deterministic transmission for the transmit end. For example, the AN device 120 adds, in L2, a TSN channel label to the data packet corresponding to the uplink packet, and controls a frequency at which the data packet enters L1 of the AN device 120. The frequency is a maximum packet sending frequency of a TSN channel that is between the AN device 120 and the UPF network element 130 and that is corresponding to the QoS flow to which the uplink packet belongs. A correspondence between the QoS flow and the TSN channel may be preconfigured.

S360. The AN device 120 processes L1.

The AN device 120 sends, to the UPF network element 130 by using L1 and an N3 interface, the data packet corresponding to the uplink packet. Correspondingly, the UPF network element 130 receives, from the AN device 120, the data packet corresponding to the uplink packet.

For specific procedures of S350 and S360, refer to an existing procedure of deterministic transmission of a packet in the TSN. The AN device 120 is used as a transmit end of the TSN, and the UPF network element 130 is used as a receive end of the TSN.

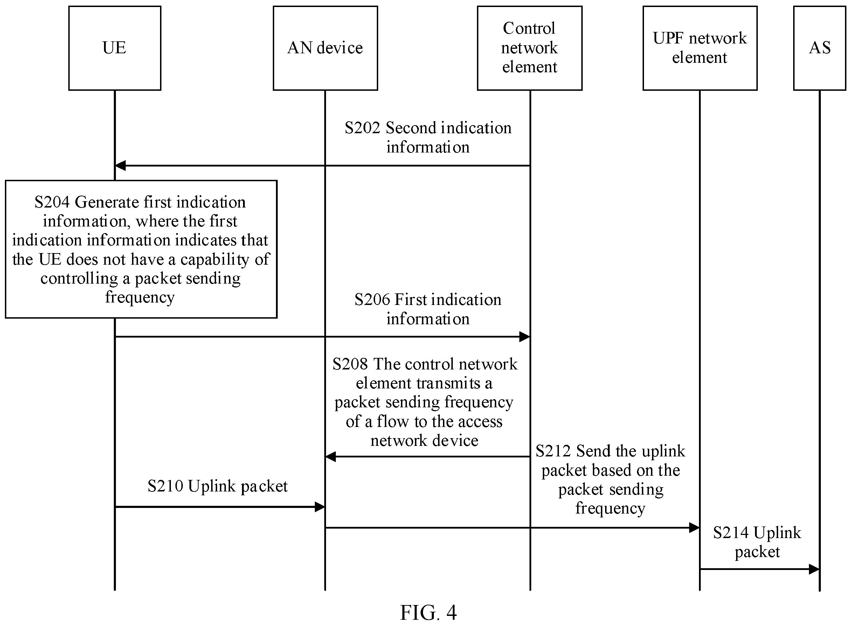

When the terminal device does not have the capability of controlling the packet sending frequency, as shown in FIG. 4, the communication method in this embodiment of this application may further include S202. To be specific, the control network element sends second indication information to the UE 110, where the second indication information is used to trigger sending of the first indication information. In other words, the second indication information is used to instruct the UE 110 to send the first indication information to the control network element. In this case, S206 may include that the UE 110 sends the first indication information to the control network element based on the second indication information.

In other words, the UE 110 reports, to the control network element at a request or an instruction of the control network element, that the UE 110 does not have the capability of controlling the packet sending frequency.

For example, the SMF network element 150 may send the second indication information to the UE 110 before the UE 110 sends a PDU session establishment request message (PDU Session Establishment Request). After receiving the second indication information, the UE 110 may add a new information element to the PDU session establishment request message as the first indication information.

For another example, after the UE 110 sends the PDU session establishment request message (PDU Session Establishment Request) to the SMF network element 150, if the SMF network element 150 determines that a QoS flow having a deterministic transmission requirement exists in the PDU session, the SMF network element 150 may send the second indication information to the UE 110 by using the AN device 120. After receiving the second indication information, the UE 110 sends the first indication information to the control network element.

For other steps in FIG. 4, refer to the descriptions in FIG. 2. Details are not described herein again.

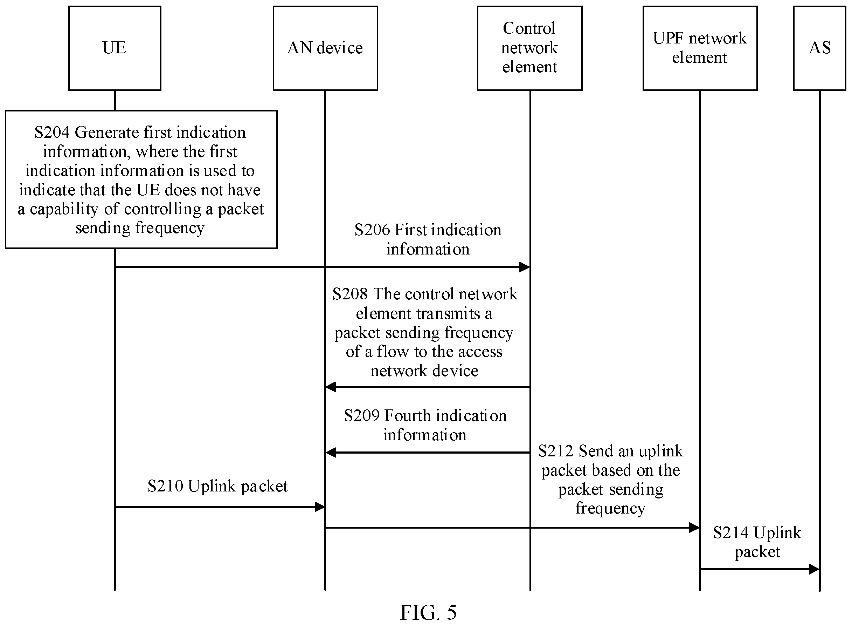

When the terminal device does not have the capability of controlling the packet sending frequency, as shown in FIG. 5, the communication method in this embodiment of this application may further include S209. To be specific, the control network element sends fourth indication information to the AN device 120, where the fourth indication information is used to instruct the AN device 120 to send a packet of the flow based on the packet sending frequency of the flow. In other words, the fourth indication information is used to indicate that the AN device 120 does not need to forward the packet sending frequency to the UE 110. Correspondingly, the AN device 120 receives the fourth indication information from the control network element.

In this implementation, S212 in which the AN device 120 sends the uplink packet of the flow based on the packet sending frequency of the flow may include that the AN device 120 sends, based on the fourth indication information and the packet sending frequency of the flow, the uplink packet of the flow.

That the AN device 120 sends, based on the fourth indication information and the packet sending frequency of the flow, the uplink packet of the flow may be understood that after receiving the packet sending frequency of the flow and the fourth indication information, the AN device 120 stores the packet sending frequency based on an indication of the fourth indication information, and then performs S212 after receiving the uplink packet that is of the flow and that is sent by the UE 110.

Optionally, the fourth indication information and the packet sending frequency of the flow may be carried in a same message, or may be separately carried in different messages.

Similarly, for other steps in FIG. 5, refer to the descriptions in FIG. 2. Details are not described herein again.

When the terminal device has the capability of controlling the packet sending frequency, the control network element may send the packet sending frequency of the flow to the terminal device in a plurality of manners. In an implementation, the control network element may transparently transmit the packet sending frequency of the flow to the terminal device by using the access network device. In another implementation, the control network element may send the packet sending frequency of the flow and third indication information to the access network device, where the third indication information is used to instruct the access network device to send the packet sending frequency of the flow to the terminal device.

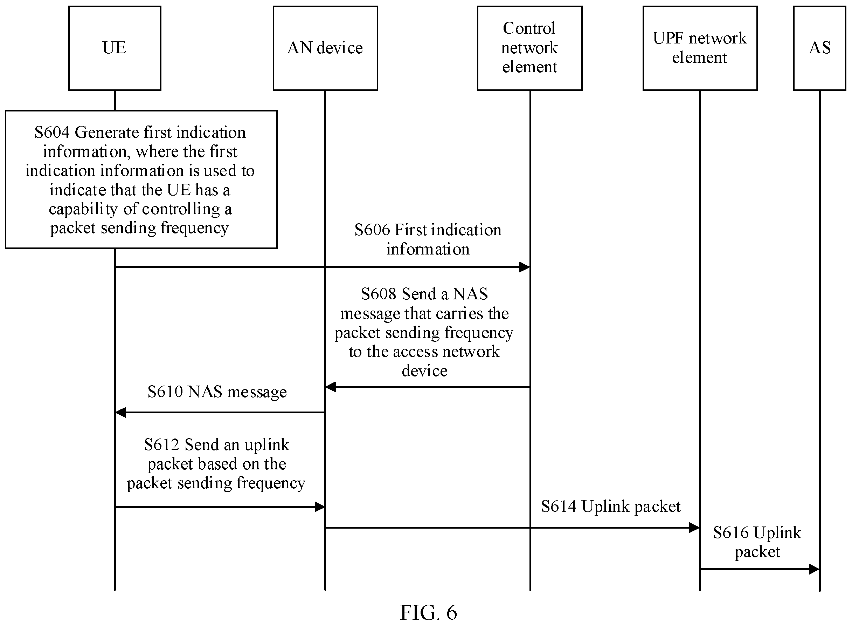

When the terminal device has the capability of controlling the packet sending frequency, and the control network element transparently transmits the packet sending frequency of the flow to the terminal device by using the access network device, a schematic flowchart of a communication method according to an embodiment of this application is shown in FIG. 6. The communication method shown in FIG. 6 may include S604, S606, S608, S610, S612, S614, and S616.

It should be understood that, although steps or operations of the communication method are shown in FIG. 6, the steps or operations are only examples, and other operations or variations of the operations in FIG. 6 may also be performed in this embodiment of this application. In addition, the steps in FIG. 6 may be performed in a sequence different from that presented in FIG. 6, and possibly not all operations in FIG. 6 need to be performed.

S604. UE 110 generates first indication information, where the first indication information indicates that the UE 110 has a capability of controlling a packet sending frequency.

For example, when the UE 110 has the capability of controlling the packet sending frequency, the UE 110 generates the first indication information, where the first indication information indicates that the UE 110 has the capability of controlling the packet sending frequency. The UE 110 that has the capability of controlling the packet sending frequency may be referred to as a second terminal device.

That the UE 110 has the capability of controlling the packet sending frequency refers to that the UE 110 can periodically send a packet to the AN device 120 based on a specified frequency.

S606. The UE 110 sends the first indication information to a control network element. Correspondingly, the control network element receives the first indication information from the UE 110. In other words, the UE 110 reports, to the control network element, that the UE 110 has the capability of controlling the packet sending frequency.

The control network element includes an AMF network element 140 or an SMF network element 150.

Optionally, the UE 110 may add a new information element to existing signaling as the first indication information. For example, when initiating a PDU session establishment request message to the AMF network element, the UE 110 may add a new information element to the PDU session establishment request message as the first indication information. Alternatively, the UE 110 may add the first indication information to newly added signaling.

S608. The control network element sends a non-access stratum (non-access stratum, NAS) message to the AN device 120, where the NAS message carries the packet sending frequency of a flow. Correspondingly, the AN device 120 receives the NAS message from the control network element.

For example, when the control network element is the AMF network element 140, an implementation in which the control network element sends the packet sending frequency of the flow to the AN device 120 may include: After determining that an uplink QoS flow having a deterministic transmission requirement exists in the PDU session requested by the UE 110, the SMF network element 150 sends, to the AMF network element 140, a packet sending frequency of the QoS flow having the deterministic transmission requirement and the first indication information; and after the AMF network element 140 receives the packet sending frequency of the QoS flow having the deterministic transmission requirement and the first indication information, because the first indication information indicates that the UE 120 has the capability of controlling the packet sending frequency, the AMF network element 140 sends the NAS message to the AN device 120, where the NAS message includes the packet sending frequency of the QoS flow having the deterministic transmission requirement.

For example, when the control network element is the SMF network element 150, an implementation in which the control network element sends the packet sending frequency of the flow to the AN device 120 may include: If the SMF network element 150 determines that an uplink QoS flow having a deterministic transmission requirement exists in the PDU session requested by the UE 110, after receiving the first indication information, the SMF network element 150 may send, to the AMF network element 140, the packet sending frequency of the QoS flow and fifth indication information, where the fifth indication information instructs the AMF network element 140 to send the packet sending frequency to the UE 110; and after receiving the fifth indication information and the packet sending frequency, the AMF network element 140 sends the NAS message to the AN device 120, where the NAS message carries the packet sending frequency.

In an implementation in which the SMF network element 150 sends the NAS message to the AN device 120 by using the AMF network element 140, the SMF network element 150 may send a PDU session establishment context response message (Nsmf_PDUSession_CreateSMContextResponse) to the AMF network element 140, where the message includes the packet sending frequency of the flow and the fifth indication information. After receiving the message, the AMF network element 140 sends the NAS message to the AN device 120 based on an indication of the fifth indication information, where the NAS message includes the packet sending frequency of the flow.

Optionally, the NAS message may further carry a QFI of the flow.

The flow may be referred to as a second flow, and the packet sending frequency may be referred to as a second packet sending frequency. The second flow may be the same as the first flow, or may be different from the first flow.

S610. The AN device 120 sends the NAS message to the UE 110. Correspondingly, the UE 110 receives the NAS message from the AN device 120.

S612. The UE 110 sends an uplink packet of the flow to the AN device 120 based on the packet sending frequency of the flow. Correspondingly, the AN device 120 receives the uplink packet from the UE 110.

For example, after the PDU session is successfully established, the UE 110 may send the uplink packet of the flow to the AN device 120 based on the packet sending frequency of the flow. The uplink packet may be referred to as a second uplink packet.

The UE 110 may perform an operation similar to that performed by the AN device 120 in S330 between the PDU layer and a packet data convergence protocol (packet data convergence protocol, PDCP), to send the uplink packet of the flow to the AN device 120 based on a packet frequency of the flow.

S614. The AN device 120 sends the uplink packet to the UPF network element 130. Correspondingly, the UPF network element 130 receives the uplink packet from the AN device 120.

For example, a TSN may be established between the AN device 120 and the UPF network element 130, to implement deterministic transmission between the AN device 120 and the UPF network element 130. The AN device 120 is used as a transmit end of the TSN, and the UPF network element 130 is used as a receive end of the TSN.

S616. The UPF network element 130 sends the uplink packet to the AS 180. Correspondingly, the AS 180 receives the uplink packet from the UPF network element 130.

For S616, refer to S214. Details are not described herein again.

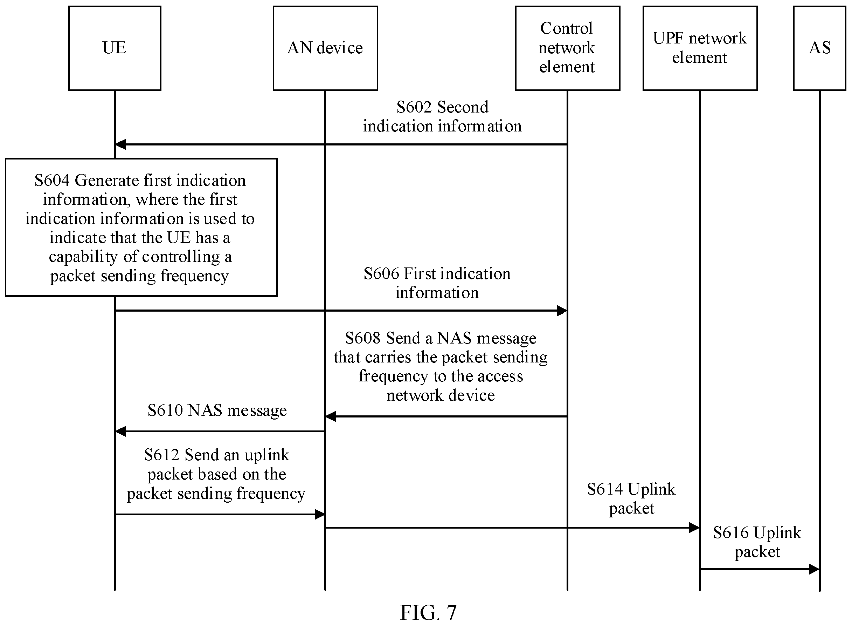

When the terminal has the capability of controlling the packet sending frequency, and the control network element transparently transmits the packet sending frequency of the flow to the terminal device by using the access network device, as shown in FIG. 7, the communication method in this embodiment of this application may further include S602. To be specific, the control network element sends second indication information to the UE 110, where the second indication information is used to trigger sending of the first indication information. In other words, the second indication information is used to instruct the UE 110 to send the first indication information to the control network element. In this case, S606 may specifically include that the UE 110 sends the first indication information to the control network element based on the second indication information.

For other steps in FIG. 7, refer to the descriptions in FIG. 6. Details are not described herein again.

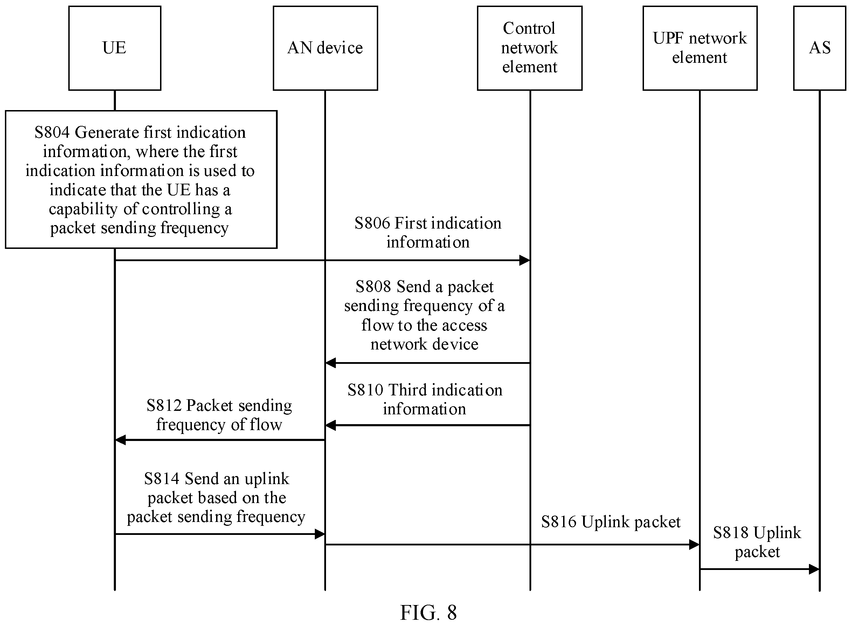

When the terminal device has the capability of controlling the packet sending frequency, and sends the packet sending frequency of the flow and the third indication information to the access network device, a schematic flowchart of a communication method according to an embodiment of this application is shown in FIG. 8. The communication method shown in FIG. 8 may include S804, S806, S808, S810, S812, S814, and S816.

It should be understood that, although steps or operations of the communication method are shown in FIG. 8, the steps or operations are only examples, and other operations or variations of the operations in FIG. 8 may also be performed in this embodiment of this application. In addition, the steps in FIG. 8 may be performed in a sequence different from that presented in FIG. 8, and possibly not all operations in FIG. 8 need to be performed.

S804. UE 110 generates first indication information, where the first indication information indicates that the UE 110 has a capability of controlling a packet sending frequency.

For the step, refer to S604. Details are not described herein again.

S806. The UE 110 sends the first indication information to a control network element. Correspondingly, the control network element receives the first indication information from the UE 110. In other words, the UE 110 reports, to the control network element, that the UE 110 has the capability of controlling the packet sending frequency.

For the step, refer to S606. Details are not described herein again.

S808. The control network element sends a packet sending frequency of a flow to the AN device 120. Correspondingly, the AN device 120 receives the packet sending frequency of the flow from the control network element.

For the step, refer to S208. Details are not described herein again.

The flow may be referred to as a second flow, and the packet sending frequency may be referred to as a second packet sending frequency. The second flow may be the same as the first flow, or may be different from the first flow.

S810. The control network element sends third indication information to the AN device 120.

The third indication information is used to instruct the AN device 120 to send the packet sending frequency of the flow to the UE 110.

In a possible implementation, the third indication information and the fourth indication information in FIG. 5 may occupy a same field in a same message. In other words, the same field in the same message may have different values in two cases: The terminal device has the capability of controlling the packet sending frequency and does not have the capability of controlling the packet sending frequency. Different values respectively represent the third indication information or the fourth indication information. For example, when the same field in the same message is set to a first value, the field is the third indication information, and when the field is set to a second value, the field is the fourth indication information.

The third indication information and the packet sending frequency of the flow may be carried in different messages, or may be carried in a same message. For example, both the third indication information and the packet sending frequency of the flow may be carried in an N2 PDU session request (N2 PDU Session Request) message.

S812. The AN device 120 sends the packet sending frequency of the flow to the UE 110 based on the third indication information. Correspondingly, the UE 110 receives the packet sending frequency of the flow from the AN device 120.

S814. The UE 110 sends an uplink packet of the flow to the AN device 120 based on the packet sending frequency of the flow. Correspondingly, the AN device 120 receives the uplink packet from the UE 110.

For the step, refer to S612. Details are not described herein again.

S816. The AN device 120 sends the uplink packet to the UPF network element 130. Correspondingly, the UPF network element 130 receives the uplink packet from the AN device 120.

For the step, refer to S614. Details are not described herein again.

S818. The UPF network element 130 sends the uplink packet to the AS 180. Correspondingly, the AS 180 receives the uplink packet from the UPF network element 130.

For this step, refer to S214. Details are not described herein again.

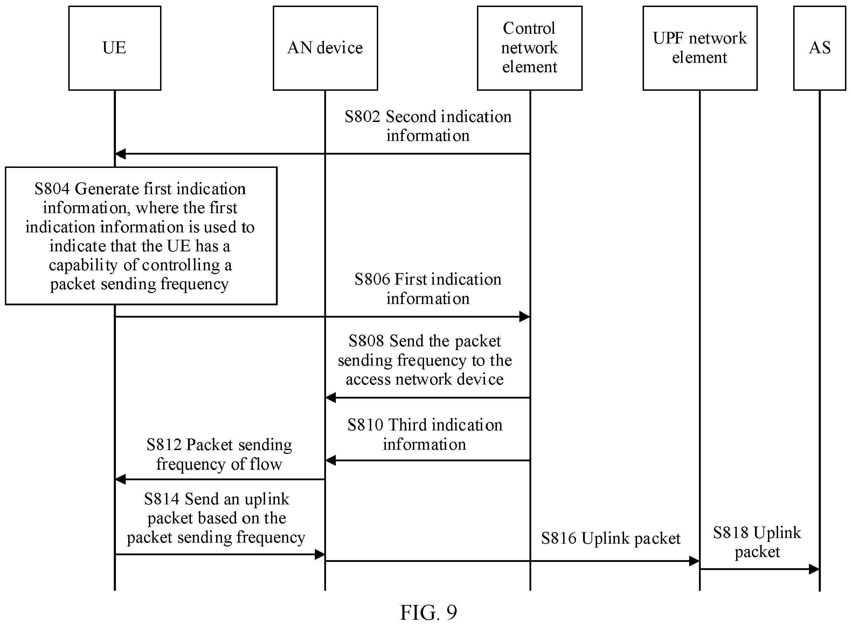

When the terminal has the capability of controlling the packet sending frequency, and sends the packet sending frequency of the flow and the third indication information to the access network device, as shown in FIG. 9, the communication method in this embodiment of this application may further include S802. To be specific, the control network element sends second indication information to the UE 110, where the second indication information is used to trigger sending of the first indication information. In other words, the second indication information is used to instruct the UE 110 to send the first indication information to the control network element. In this case, S806 may specifically include that the UE 110 sends the first indication information to the control network element based on the second indication information.

For other steps in FIG. 9, respectively refer to the descriptions in FIG. 8. Details are not described herein again.

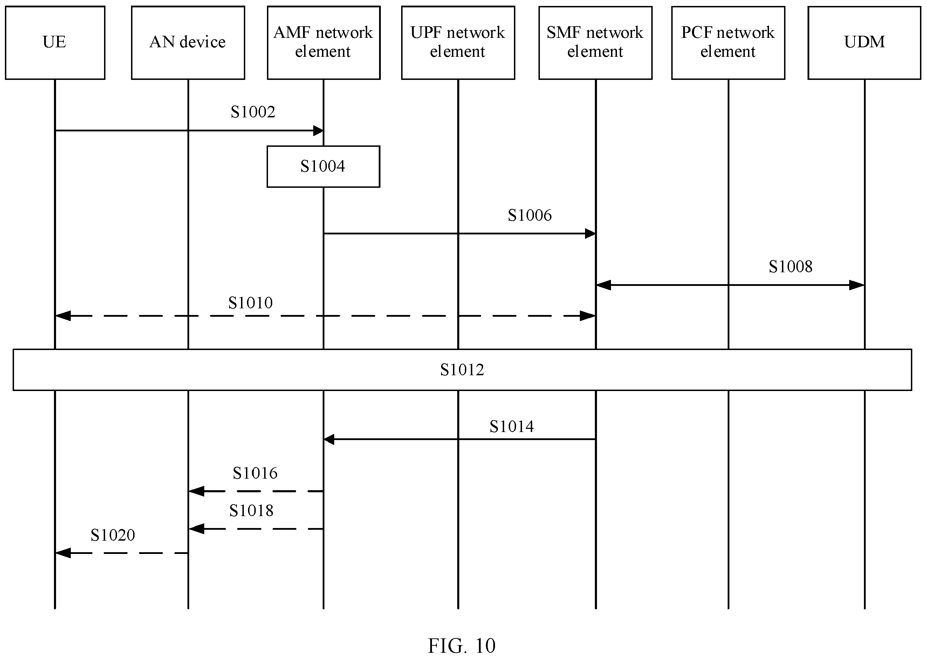

The following uses an example in which the control network element is an SMF network element to describe in detail, with reference to FIG. 10, a specific transmission manner of a packet sending frequency of a flow in the communication method provided in this application.

In the communication method shown in FIG. 10, regardless of whether a terminal device has a capability of controlling the packet sending frequency, the terminal device sends first indication information to the control network element, and when the terminal device has the capability of controlling the packet sending frequency, the control network element transparently transmits the packet sending frequency of the flow to the terminal device by using an access network device.

It should be understood that, although steps or operations of the communication method are shown in FIG. 10, the steps or operations are only examples, and other operations or variations of the operations in FIG. 10 may also be performed in this embodiment of this application. In addition, the steps in FIG. 10 may be performed in a sequence different from that presented in FIG. 10, and possibly not all operations in FIG. 10 need to be performed.

S 1002. UE sends a PDU session establishment request message to an AMF network element.

Optionally, if an option of reporting whether the UE has the capability of sending a packet based on a frequency is set for the UE, an information element is added to the PDU session establishment request message as the first indication information, to indicate whether the UE has the capability of sending the packet based on the frequency.

Alternatively, if the UE receives second indication information from the AMF network element before performing S 1002, the UE may add an information element to the PDU session establishment request message as the first indication information, to indicate whether the UE has the capability of controlling the packet sending frequency.

S1004. The AMF network element selects a suitable SMF network element for the UE.

S1006. The AMF network element sends a PDU session establishment request (Nsmf_PDUSession_CreateSMRequest) message to the SMF network element, where the message includes information used to create a PDU session.

S1008. The SMF network element sends a subscription data obtaining request (Nudm_SubscriberData_GetRequest) message to a UDM network element, to request to obtain subscription data of the UE. The UDM network element sends a subscription data obtaining response (Nudm_SubscriberData_GetResponse) message to the SMF network element, to send the subscription data of the UE to the SMF network element.

S1010. If the SMF network element determines, based on the subscription data, that an uplink QoS flow having a deterministic transmission requirement exists in a PDU session of the UE, and the UE does not report the first indication information in S1002, the SMF network element sends the second indication information to the UE by using the AMF network element and an AN device, to instruct the UE to report the first indication information. Correspondingly, after receiving the second indication information, the UE reports, to the SMF network element, the first indication information used to indicate whether the UE has the capability of controlling the packet sending frequency.

S1012. The SMF network element selects a UPF network element for the UE, and performs authentication/authorization on the UE.

S1014. The SMF network element sends a PDU session establishment context response (Nsmf_PDUSession_CreateSMContext Response) message to the AMF network element, where the message includes a QFI of the uplink QoS flow having the deterministic transmission requirement and a packet frequency corresponding to the QoS flow, and includes the first indication information reported by the UE in S1002 or S1010.

S1016. If the first indication information in the PDU session establishment context response message is used to indicate that the UE has the capability of controlling the packet sending frequency, the AMF network element sends a NAS message to the AN device, where the NAS message carries the QFI of the uplink QoS flow having the deterministic transmission requirement and the packet frequency of the QoS flow.

After receiving the NAS message from the AMF network element, the AN device performs S1020.

S1018. If the first indication information in the PDU session establishment context response message is used to indicate that the UE does not have the capability of controlling the packet sending frequency, the AMF network element sends an N2 PDU session request message to the AN device, where the N2 PDU session request message includes the QFI of the uplink QoS flow having the deterministic transmission requirement and the packet frequency of the QoS flow.

It should be noted that after performing S1018, the AN device does not perform S1020.

S1020. The AN device forwards the NAS message to the UE when a corresponding radio resource is allocated between the AN device and the UE.

In the communication method provided in this application, when the UE 110 needs to be handed over from the AN device 120 to a target AN device, if the PDU session of the UE 110 stores the uplink flow (for example, the QoS flow) having the deterministic transmission requirement, and the UE 110 does not have the capability of controlling the packet sending frequency, the control network element may send the packet sending frequency of the flow to the target AN device. In this way, after the UE 110 is handed over to the target AN device, the target AN device may implement, like the AN device 120, deterministic transmission between the UE 110 and the AS 180.

For example, the SMF network element may send the QFI of the QoS flow and the packet sending frequency of the QoS flow to the target AN device by using the AMF network element.

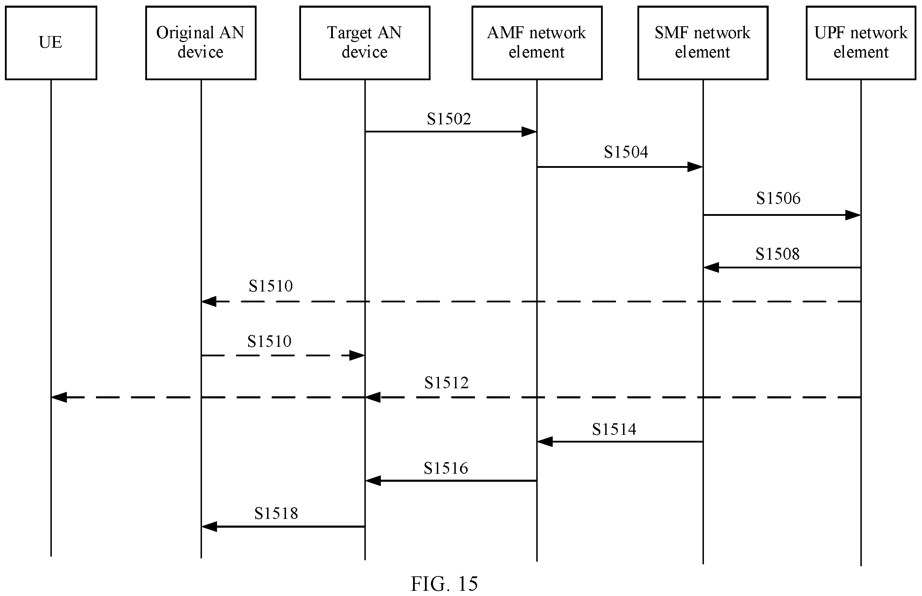

A schematic flowchart of a communication method according to another embodiment of this application is shown in FIG. 15. It should be understood that, although steps or operations of the communication method are shown in FIG. 15, the steps or operations are only examples, and other operations or variations of the operations in FIG. 15 may also be performed in this embodiment of this application. In addition, the steps in FIG. 15 may be performed in a sequence different from that presented in FIG. 15, and possibly not all operations in FIG. 15 need to be performed.

S1502. A target (target) access network device sends an N2 path switch request (N2 Path Switch Request) message to an AMF network element, to notify the AMF network element that UE has moved to a new cell and notify the AMF network element of a PDU session of the UE that needs to be handed over.

S1504. The AMF network element sends, by using a PDU session context update request (Nsmf_PDUSession_UpdateSMContext Request) message, N2 session management information (N2 SM information) to each SMF network element associated with the PDU session of the UE.

After receiving the information sent by the AMF network element, the SMF network element determines whether a current UPF network element can still serve the UE.

S1506. If the SMF network element determines that the current UPF can still serve the UE, the SMF network element may not reselect a UPF network element for the UE, and may send an N4 session modification request (N4 Session Modification Request) message to the current UPF network element. The N4 session modification request message includes a tunnel identifier. For example, the N4 session modification request message includes a tunnel identifier of a tunnel between the current UPF network element and the target AN device.

S1508. The UPF network element sends an N4 session modification response (N4 Session Modification Response) message to the SMF network element.

S1514. The SMF network element sends a PDU session context update request response (Nsmf_PDUSession_UpdateSMContext Response) message to the AMF network element.

If an uplink QoS flow that has a deterministic transmission requirement exists in the PDU session of the UE, and the SMF network element has learned that the UE does not have the capability of controlling the packet sending frequency, the SMF network element adds an information element to an N11 message response message, where the information element carries the QFI and the packet sending frequency of the QoS flow.

S1516. After all SMF network elements communicating with the AMF send N11 message response messages to the AMF network element, the AMF network element aggregates core network (core net, CN) tunnel information in these PDU session context update request response messages, and sends the information to the target AN device by using an N2 path switch request acknowledgment (N2 Path Switch Request Ack) message.

S1518. The target AN device sends a release resource (Release Resource) message to an original AN device, confirms that the handover succeeds, and triggers the original access network device to release the resource.

Optionally, this embodiment of this application may further include S1510. S1510 includes: To help the target AN device implement a re-sorting function, the UPF network element immediately sends one or more end marker (end marker) packets to the original AN device in an old path after handing over the path. After receiving the end marker packets, the original AN device sends the end marker packet to the target AN device.

Optionally, this embodiment of this application may further include S1512. S1512 includes: The UPF network element sends a downlink packet of the UE to the target AN device after sending the end marker to the original AN device; and the target AN device sends the downlink packet to the UE.

In the foregoing communication methods, names of messages such as the PDU session establishment request message (PDU Session Establishment Request), the PDU session establishment request (Nsmf_PDUSession_CreateSMRequest) message, the subscription data obtaining request (Nudm_SubscriberData_GetRequest) message, the subscription data obtaining request response (Nudm_SubscriberData_GetResponse) message, the PDU session establishment context response (Nsmf_PDUSession_CreateSMContext Response) message, the N2 PDU session request (N2 PDU Session Request) message, the N2 path switch request (N2 Path Switch Request) message, the N4 session modification request (N4 Session Modification Request) message, the N4 session modification response (N4 Session Modification Response) message, the PDU session context update request response (Nsmf_PDUSession_UpdateSMContext Response) message, the N2 path switch request acknowledgment (N2 Path Switch Request Ack), and the release resource (Release Resource) message are merely examples.

In different technical specifications, communications protocols, or communications standards, names of messages that have same or similar functions as the foregoing messages may be different. Names of these messages are not limited in the communication method in this application.

It should be understood that a communications network to which the communication method provided in this application is applicable may include a communications network such as a 3G, 4G, or 5G communications network.

FIG. 11 is a schematic structural diagram of a terminal device according to an embodiment of this application. It should be understood that, a terminal device 1100 shown in FIG. 11 is merely an example, and the terminal device in this embodiment of this application may further include another module or unit, or include modules having functions similar to those of modules in FIG. 11, or may not need to include all modules in FIG. 11.

The terminal device 1100 may include a processing module 1110 and a sending module 1120. Optionally, the terminal device 1100 may further include a receiving module 1130.

The terminal device 1100 may be configured to perform the steps performed by the UE 110 in the communication method shown in any one of FIG. 2, FIG. 4, and FIG. 5.

For example, the processing module 1110 may be configured to perform S204, the sending module 1120 may be configured to perform the steps or operations performed by the UE 110 in S206 and S210, and the receiving module 1130 may be configured to perform the step or operation performed by the UE 110 in S202.

Alternatively, the terminal device 1100 may be configured to perform the steps performed by the UE 110 in the communication method shown in FIG. 6 or FIG. 7.

For example, the processing module 1110 may be configured to perform S604, the sending module 1120 may be configured to perform the steps or operations performed by the UE 110 in S606 and S612, and the receiving module 1130 may be configured to perform steps or operations performed by the UE 110 in S602 and S610.

Alternatively, the terminal device 1100 may be configured to perform the steps performed by the UE 110 in the communication method shown in FIG. 8 or FIG. 9.

For example, the processing module 1110 may be configured to perform S804, the sending module 1120 may be configured to perform the steps or operations performed by the UE 110 in S806 and S814, and the receiving module 1130 may be configured to perform the steps or operations performed by the UE 110 in S802 and S812.

Alternatively, the terminal device 1100 may be configured to perform the steps or operations performed by the UE in FIG. 10 or FIG. 15.

FIG. 12 is a schematic structural diagram of a control network element according to an embodiment of this application. It should be understood that, a control network element 1200 shown in FIG. 12 is merely an example, and the control network element in this embodiment of this application may further include another module or unit, or include modules having functions similar to those of modules in FIG. 12, or may not need to include all modules in FIG. 12.

The control network element 1200 may include a receiving module 1210 and a sending module 1220.

The control network element 1200 may be configured to perform the steps performed by the control network element in the communication method shown in any one of FIG. 2, FIG. 4, and FIG. 5.

For example, the receiving module 1210 may be configured to perform the operation or step performed by the control network element in S206, and the sending module 1220 may be configured to perform the steps or operations performed by the control network element in S202, S208, and S209.

Alternatively, the control network element 1200 may be configured to perform the steps performed by the control network element in the communication method shown in FIG. 6 or FIG. 7.

For example, the receiving module 1210 may be configured to perform the operation or step performed by the control network element in S606, and the sending module 1220 may be configured to perform the steps or operations performed by the control network element in S602 and S608.

Alternatively, the control network element 1200 may be configured to perform the steps performed by the control network element in the communication method shown in FIG. 8 or FIG. 9.

For example, the receiving module 1210 may be configured to perform the operation or step performed by the control network element in S806, and the sending module 1220 may be configured to perform the steps or operations performed by the control network element in S802, S808, and S810.

Alternatively, the control network element may be configured to perform the steps or operations performed by the SMF network element in FIG. 10 or FIG. 15.

The embodiments, to which the following description of Fig. 13 refers to, are not part of the invention, but illustrative examples necessary for understanding the invention.

FIG. 13 is a schematic structural diagram of an access network device according to an embodiment of this application. It should be understood that the access network device 1300 shown in FIG. 13 is merely an example, and the control network element in this embodiment of this application may further include another module or unit, or include modules having functions similar to those of modules in FIG. 13, or does not need to include all modules in FIG. 13.

The access network device 1300 may include a receiving module 1310 and a sending module 1320.

The access network device 1300 may be configured to perform steps performed by the AN device 120 in the communication method shown in any one of FIG. 2, FIG. 4, and FIG. 5.

For example, the receiving module 1310 may be configured to perform the operations or steps performed by the AN device 120 in S208, S209, and S210, and the sending module 1320 may be configured to perform the step or operation performed by the AN device 120 in S212.

Alternatively, the access network device 1300 may be configured to perform the steps performed by the AN device 120 in the communication method shown in FIG. 6 or FIG. 7.

For example, the receiving module 1310 may be configured to perform the operations or steps performed by the AN device 120 in S608 and S612, and the sending module 1320 may be configured to perform the steps or operations performed by the AN device 120 in S610 and S614.

Alternatively, the access network device 1300 may be configured to perform the steps performed by the AN device 120 in the communication method shown in FIG. 8 or FIG. 9.

For example, the receiving module 1310 may be configured to perform the operations or steps performed by the AN device 120 in S808, S810, and S814, and the sending module 1320 may be configured to perform the steps or operations performed by the AN device 120 in S812 and S816.

Alternatively, the access network device 1300 may be configured to perform the steps or operations performed by the AN device in FIG. 10 or FIG. 15.

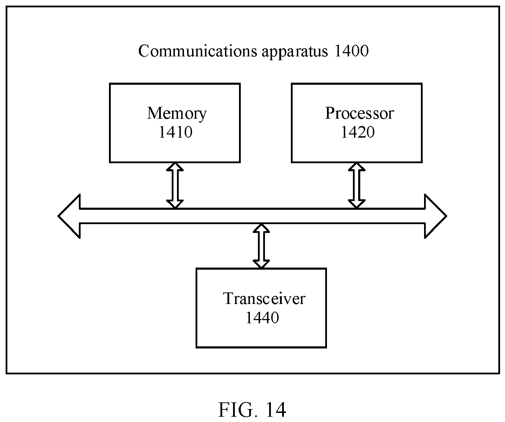

FIG. 14 is a schematic structural diagram of a communications apparatus according to an embodiment of this application. The communications apparatus 1400 may include a processor 1420 and a transceiver 1440.

Optionally, the communications apparatus 1400 may further include a memory 1410. The memory 1410 may be integrated in the processor 1420. The memory 1410 is configured to store data and program code.

In an embodiment, the communications apparatus may be a terminal device.

For example, the processor 1420 may be configured to perform S204, and the transceiver 1440 may be configured to perform the steps or operations performed by the UE 110 in S202, S206, and S210.

For example, the processor 1420 may be configured to perform S604, and the transceiver 1440 may be configured to perform the steps or operations performed by the UE 110 in S602, S606, S610, and S612.

For example, the processor 1420 may be configured to perform S804, and the transceiver 1440 may be configured to perform the steps or operations performed by the UE 110 in S802, S806, S812, and S814.

Alternatively, the communications apparatus may be a chip that triggers a computer to perform an operation of the terminal device. The communications apparatus stores an instruction. When the instruction is run on the computer, the computer is enabled to perform the steps performed by the UE in the foregoing aspects.

In another embodiment, the communications apparatus may be a control network element.

For example, the transceiver 1440 may be configured to perform the operations or steps performed by the control network element in S202, S206, S208, and S209.

For example, the transceiver 1440 may be configured to perform the operations or steps performed by the control network element in S602, S606, and S608.

For example, the transceiver may be configured to perform the operations or steps performed by the control network element in S802, S806, S808, and S810.

Alternatively, the communications apparatus may be a chip that triggers a computer to perform an operation of the control network element. The communications apparatus stores an instruction. When the instruction is run on the computer, the computer is enabled to perform the steps performed by the control network element in the foregoing aspects.

In still another embodiment, the communications apparatus may be an access network device.

For example, the transceiver 1440 may be configured to perform the operations or steps performed by the AN device 120 in S208, S209, S210, and S212.

For example, the transceiver 1440 may be configured to perform the operations or steps performed by the AN device 120 in S608, S610, S612, and S614.

For example, the transceiver 1440 may be configured to perform the operations or steps performed by the AN device 120 in S808, S810, S812, S814, and S816.

Alternatively, the communications apparatus may be a chip that triggers a computer to perform an operation of the access network device. The communications apparatus stores an instruction. When the instruction is run on a computer, the computer is enabled to perform the steps performed by the AN device 120 in the foregoing aspects.

The processor configured to perform functions of the communications apparatus in this application may be a central processing unit (CPU), a general purpose processor, a digital signal processor (DSP), an application-specific integrated circuit (ASIC), a field programmable gate array (FPGA) or another programmable logical device, a transistor logical device, a hardware component, or any combination thereof. The processor may implement or execute various example logical blocks, modules, and circuits described with reference to content disclosed in this application. The processor may be a combination of processors implementing a computing function, for example, a combination of one or more microprocessors, or a combination of the DSP and a microprocessor.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application.

Therefore, the protection scope of this application shall be subject to the protection scope of the claims.

## Claims

1. A communication method for deterministic transmission in a 5G radio communication system, comprising:
determining (S204), by a terminal device, first indication information, wherein the first indication information is used to indicate that the terminal device has a capability of controlling a packet sending frequency, which is defined as a rate of a packet transmission, or is used to indicate that the terminal device does not have the capability of controlling the packet sending frequency;
sending (S206), by the terminal device, the first indication information to a control network element; and
wherein when the first indication information is used to indicate that the terminal device has the capability of controlling the packet sending frequency, the communication method further comprises:
receiving, by the terminal device, a packet sending frequency of a flow from the control network element or an access network device; and
sending (S210), by the terminal device, an uplink packet of the flow based on the packet sending frequency, to implement deterministic transmission of the uplink packet.

2. The communication method according to claim 1, wherein the communication method further comprises:
receiving (S202), by the terminal device, second indication information from the control network element, wherein
the sending, by the terminal device, the first indication information to a control network element comprises:
sending (S206), by the terminal device, the first indication information to the control network element based on the second indication information.

3. A communication method for deterministic transmission in a 5G radio transmission system, comprising:
receiving (S206), by a control network element, first indication information from a terminal device, wherein the first indication information is used to indicate whether the terminal device has a capability of controlling a packet sending frequency which is defined as a rate of a packet transmission; and
when the first indication information indicates that the terminal device does not have the capability of controlling the packet sending frequency,
sending (S208), by the control network element, a packet sending frequency of a flow to an access network device, or
when the first indication information indicates that the terminal device has the capability of controlling the packet sending frequency,
sending, by the control network element, the packet sending frequency of a flow to the terminal device, or
sending (S810), by the control network element, third indication information to the access network device, wherein the third indication information is used to instruct the access network device to send the packet sending frequency to the terminal device.

4. The communication method according to claim 3, wherein before the receiving, by a control network element, first indication information from a terminal device, the communication method further comprises:
sending (S202), by the control network element, second indication information to the terminal device, wherein the second indication information is used to trigger sending of the first indication information.

5. The communication method according to claim 3 or 4, wherein when the first indication information indicates that the terminal device does not have the capability of controlling the packet sending frequency, the communication method further comprises:
sending (S209), by the control network element, fourth indication information to the access network device, wherein the fourth indication information is used to instruct the access network device to send an uplink packet of the flow based on the packet sending frequency.

6. A terminal device (1100) for a 5G radio communication system, comprising:
a processing module (1110), configured to determine first indication information, wherein the first indication information is used to indicate whether the terminal device has a capability of controlling a packet sending frequency, which is defined as a rate of a packet transmission, or is used to indicate that the terminal device does not have the capability of controlling the packet sending frequency; and
a sending module (1120), configured to send the first indication information to a control network element.
wherein when the first indication information is used to indicate that the terminal device has the capability of controlling the packet sending frequency, the terminal device further comprises a processing module (1130), which is further configured to receive a packet sending frequency of a flow from the control network element or an access network device; and
the sending module is further configured to send an uplink packet of the flow based on the packet sending frequency, to implement deterministic transmission of the uplink packet.

7. A control network element (1200) for a 5G radio communication system, comprising:
a receiving module (1210), configured to receive first indication information from a terminal device, wherein the first indication information is used to indicate whether the terminal device has a capability of controlling a packet sending frequency which is defined as a rate of a packet transmission; and
a sending module (1220), configured to:
send a packet sending frequency of a flow to an access network device, when the first indication information indicates that the terminal device does not have the capability of controlling the packet sending frequency, and
send the packet sending frequency of a flow to the terminal device or send third indication information to the access network device, when the first indication information indicates that the terminal device has the capability of controlling the packet sending frequency, wherein the third indication information is used to instruct the access network device to send the packet sending frequency to the terminal device.

8. A computer storage medium, wherein the computer-readable storage medium stores program code, which when executed by a communications apparatus associated with a terminal device, causes said communication apparatus to perform the steps of the method of any of claims 1 to 2, or
a computer storage medium, wherein the computer-readable storage medium stores program code, which when executed by a communications apparatus associated with a control network element, causes said communication apparatus to perform the steps of the method according to any of claims 3 to 5.

## Patentansprüche

1. Kommunikationsverfahren zur deterministischen Übertragung in einem 5G-Funkkommunikationssystem, umfassend:
Bestimmen (S204) von ersten Anzeigeinformationen durch ein Endgerät, wobei die ersten Anzeigeinformationen verwendet werden, um anzuzeigen, dass das Endgerät die Fähigkeit aufweist, eine Paketsendefrequenz zu steuern, die als Rate einer Paketübertragung definiert ist, oder verwendet werden, um anzuzeigen, dass das Endgerät nicht die Fähigkeit aufweist, die Paketsendefrequenz zu steuern;
Senden (S206) der ersten Anzeigeinformationen durch das Endgerät an ein Steuernetzwerkelement; und
wobei, wenn die ersten Anzeigeinformationen verwendet werden, um anzuzeigen, dass das Endgerät die Fähigkeit aufweist, die Paketsendefrequenz zu steuern, das Kommunikationsverfahren ferner Folgendes umfasst:
Empfangen einer Paketsendefrequenz eines Flusses von dem Steuernetzwerkelement oder einem Zugangsnetzwerkgerät durch das Endgerät; und
Senden (S210) eines Uplink-Pakets des Flusses auf Grundlage der Paketsendefrequenz durch das Endgerät, um eine deterministische Übertragung des Uplink-Pakets zu implementieren.

2. Kommunikationsverfahren nach Anspruch 1, wobei das Kommunikationsverfahren ferner Folgendes umfasst:
Empfangen (S202) zweiter Anzeigeinformationen von dem Steuernetzwerkelement durch das Endgerät, wobei das Senden der ersten Anzeigeinformationen durch das Endgerät an ein Steuernetzwerkelement Folgendes umfasst:
Senden (S206) der ersten Anzeigeinformationen durch das Endgerät an das Steuernetzwerkelement auf Grundlage der zweiten Anzeigeinformationen.

3. Kommunikationsverfahren zur deterministischen Übertragung in einem 5G-Funkübertragungssystem, umfassend:
Empfangen (S206) erster Anzeigeinformationen von einem Endgerät durch ein Steuernetzwerkelement, wobei die ersten Anzeigeinformationen verwendet werden, um anzuzeigen, ob das Endgerät die Fähigkeit aufweist, eine Paketsendefrequenz zu steuern, die als Rate einer Paketübertragung definiert ist; und
wenn die ersten Anzeigeinformationen anzeigen, dass das Endgerät nicht die Fähigkeit aufweist, die Paketsendefrequenz zu steuern, Senden (S208) einer Paketsendefrequenz eines Flusses durch das Steuernetzwerkelement an ein Zugangsnetzwerkgerät oder,
wenn die ersten Anzeigeinformationen anzeigen, dass das Endgerät die Fähigkeit aufweist, die Paketsendefrequenz zu steuern,
Senden der Paketsendefrequenz eines Flusses durch das Steuernetzwerkelement an das Endgerät oder
Senden (S810) dritter Anzeigeinformationen durch das Steuernetzwerkelement an das Zugangsnetzwerkgerät, wobei die dritten Anzeigeinformationen verwendet werden, um das Zugangsnetzwerkgerät anzuweisen, die Paketsendefrequenz an das Endgerät zu senden.

4. Kommunikationsverfahren nach Anspruch 3, wobei das Kommunikationsverfahren vor dem Empfangen von ersten Anzeigeinformationen von einem Endgerät durch ein Steuernetzwerkelement ferner Folgendes umfasst:
Senden (S202) zweiter Anzeigeinformationen durch das Steuernetzwerkelement an das Endgerät, wobei die zweiten Anzeigeinformationen verwendet werden, um das Senden der ersten Anzeigeinformationen auszulösen.

5. Kommunikationsverfahren nach Anspruch 3 oder 4, wobei, wenn die ersten Anzeigeinformationen anzeigen, dass das Endgerät nicht die Fähigkeit aufweist, die Paketsendefrequenz zu steuern, das Kommunikationsverfahren ferner Folgendes umfasst:
Senden (S209) von vierten Anzeigeinformationen durch das Steuernetzwerkelement an das Zugangsnetzwerkgerät, wobei die vierten Anzeigeinformationen verwendet werden, um das Zugangsnetzwerkgerät anzuweisen, ein Uplink-Paket des Flusses auf Grundlage der Paketsendefrequenz zu senden.

6. Endgerät (1100) für ein 5G-Funkkommunikationssystem, umfassend:
ein Verarbeitungsmodul (1110), das dazu konfiguriert ist, erste Anzeigeinformationen zu bestimmen, wobei die ersten Anzeigeinformationen verwendet werden, um anzuzeigen, ob das Endgerät die Fähigkeit aufweist, eine Paketsendefrequenz zu steuern, die als Rate einer Paketübertragung definiert ist, oder verwendet werden, um anzuzeigen, dass das Endgerät nicht die Fähigkeit aufweist, die Paketsendefrequenz zu steuern; und
ein Sendemodul (1120), das dazu konfiguriert ist, die ersten Anzeigeinformationen an ein Steuernetzwerkelement zu senden, wobei, wenn die ersten Anzeigeinformationen verwendet werden, um anzuzeigen, dass das Endgerät die Fähigkeit aufweist, die Paketsendefrequenz zu steuern, das Endgerät ferner ein Verarbeitungsmodul (1130) umfasst, das ferner dazu konfiguriert ist, eine Paketsendefrequenz eines Flusses von dem Steuernetzwerkelement oder einem Zugangsnetzwerkgerät zu empfangen; und
das Sendemodul ferner dazu konfiguriert ist, ein Uplink-Paket des Flusses auf Grundlage der Paketsendefrequenz zu senden, um eine deterministische Übertragung des Uplink-Pakets zu implementieren.

7. Steuernetzwerkelement (1200) für ein 5G-Funkkommunikationssystem, umfassend:
ein Empfangsmodul (1210), das dazu konfiguriert ist, erste Anzeigeinformationen von einem Endgerät zu empfangen, wobei die ersten Anzeigeinformationen verwendet werden, um anzuzeigen, ob das Endgerät die Fähigkeit aufweist, eine Paketsendefrequenz zu steuern, die als Rate einer Paketübertragung definiert ist; und
ein Sendemodul (1220), das zu Folgendem konfiguriert ist:
wenn die ersten Anzeigeinformationen anzeigen, dass das Endgerät nicht die Fähigkeit aufweist, die Paketsendefrequenz zu steuern, Senden einer Paketsendefrequenz eines Flusses an ein Zugangsnetzwerkgerät und,
wenn die ersten Anzeigeinformationen anzeigen, dass das Endgerät die Fähigkeit aufweist, die Paketsendefrequenz zu steuern, Senden der Paketsendefrequenz eines Flusses an das Endgerät oder Senden dritter Anzeigeinformationen an das Zugangsnetzwerkgerät, wobei die dritten Anzeigeinformationen verwendet werden, um das Zugangsnetzwerkgerät anzuweisen, die Paketsendefrequenz an das Endgerät zu senden.

8. Computerspeichermedium, wobei auf dem computerlesbaren Speichermedium Programmcode gespeichert ist, der bei Ausführung durch eine Kommunikationsvorrichtung, die einem Endgerät zugeordnet ist, die Kommunikationsvorrichtung dazu veranlasst, die Schritte des Verfahrens nach einem der Ansprüche 1 bis 2 durchzuführen, oder
Computerspeichermedium, wobei auf dem computerlesbaren Speichermedium Programmcode gespeichert ist, der bei Ausführung durch eine Kommunikationsvorrichtung, die einem Steuernetzwerkelement zugeordnet ist, die Kommunikationsvorrichtung dazu veranlasst, die Schritte des Verfahrens nach einem der Ansprüche 3 bis 5 durchzuführen.

## Revendications

1. Procédé de communication pour transmission déterministe dans un système de communication radio 5G, comprenant :
la détermination (S204), par un dispositif terminal, des premières informations d'indication, dans lequel les premières informations d'indication sont utilisées pour indiquer que le dispositif terminal a la capacité de commander une fréquence d'envoi de paquets, qui est définie comme un débit de transmission de paquets, ou est utilisée pour indiquer que le dispositif terminal n'a pas la capacité de commander la fréquence d'envoi de paquets ;
l'envoi (S206), par le dispositif de réseau, des premières informations d'indication à un élément de réseau de commande ; et
dans lequel, lorsque les premières informations d'indication sont utilisées pour indiquer que le dispositif terminal a la capacité de commander la fréquence d'envoi de paquets, le procédé de communication comprend également :
la réception, par le dispositif terminal, d'une fréquence d'envoi de paquets d'un flux provenant de l'élément de réseau de commande ou d'un dispositif de réseau d'accès ; et
l'envoi (S210), par le dispositif terminal, d'un paquet de liaison montante du flux sur la base de la fréquence d'envoi de paquet, pour mettre en œuvre une transmission déterministe du paquet de liaison montante.

2. Procédé de communication selon la revendication 1, dans lequel le procédé de communication comprend également :
la réception (S202), par le dispositif terminal, des deuxièmes informations d'indication provenant de l'élément de réseau de commande, dans lequel
l'envoi, par le dispositif terminal, des premières informations d'indication à un élément de réseau de commande comprend :
l'envoi (S206), par le dispositif terminal, des premières informations d'indication à l'élément de réseau de commande sur la base des deuxièmes informations d'indication.

3. Procédé de communication pour transmission déterministe dans un système de transmission radio 5G, comprenant :
la réception (S206), par un élément de réseau de commande, de premières informations d'indication provenant d'un dispositif terminal, dans lequel les premières informations d'indication sont utilisées pour indiquer si le dispositif terminal a la capacité de commander une fréquence d'envoi de paquets qui est définie comme un débit de transmission de paquets ; et
lorsque les premières informations d'indication indiquent que le dispositif terminal n'a pas la capacité de commander la fréquence d'envoi de paquets,
l'envoi (S208), par l'élément de réseau de commande, d'une fréquence d'envoi de paquets d'un flux à un dispositif de réseau d'accès, ou
lorsque les premières informations d'indication indiquent que le dispositif terminal a la capacité de commander la fréquence d'envoi de paquets,
l'envoi, par l'élément de réseau de commande, de la fréquence d'envoi de paquets d'un flux au dispositif terminal, ou
l'envoi (S810), par l'élément de réseau de commande, des troisièmes informations d'indication au dispositif de réseau d'accès, dans lequel les troisièmes informations d'indication sont utilisées pour ordonner au dispositif de réseau d'accès d'envoyer la fréquence d'envoi de paquets au dispositif terminal.

4. Procédé de communication selon la revendication 3, dans lequel avant la réception, par un élément de réseau de commande, des premières informations d'indication provenant d'un dispositif terminal, le procédé de communication comprend également :
l'envoi (S202), par l'élément de réseau de commande, des deuxièmes informations d'indication au dispositif terminal, dans lequel les deuxièmes informations d'indication sont utilisées pour déclencher l'envoi des premières informations d'indication.

5. Procédé de communication selon la revendication 3 ou 4, dans lequel lorsque les premières informations d'indication indiquent que le dispositif terminal n'a pas la capacité de commander la fréquence d'envoi de paquets, le procédé de communication comprend également :
l'envoi (S209), par l'élément de réseau de commande, de quatrièmes informations d'indication au dispositif de réseau d'accès, dans lequel les quatrièmes informations d'indication sont utilisées pour ordonner au dispositif de réseau d'accès d'envoyer un paquet de liaison montante du flux sur la base de la fréquence d'envoi de paquets.

6. Dispositif terminal (1100) pour un système de communication radio 5G, comprenant :
un module de traitement (1110), configuré pour déterminer des premières informations d'indication, dans lequel les premières informations d'indication sont utilisées pour indiquer si le dispositif terminal a la capacité de commander une fréquence d'envoi de paquets, qui est définie comme un débit de transmission de paquets, ou est utilisée pour indiquer que le dispositif terminal n'a pas la capacité de commander la fréquence d'envoi de paquets ; et
un module d'envoi (1120), configuré pour envoyer les premières informations d'indication à un élément de réseau de commande. dans lequel lorsque les premières informations d'indication sont utilisées pour indiquer que le dispositif terminal a la capacité de commander la fréquence d'envoi de paquets, le dispositif terminal comprend également un module de traitement (1130), qui est également configuré pour recevoir une fréquence d'envoi de paquets d'un flux provenant de l'élément de réseau de commande ou d'un dispositif de réseau d'accès ; et
le module d'envoi est également configuré pour envoyer un paquet de liaison montante du flux sur la base de la fréquence d'envoi de paquets, afin de mettre en œuvre une transmission déterministe du paquet de liaison montante.

7. Élément de réseau de commande (1200) pour un système de communication radio 5G, comprenant :
un module de réception (1210), configuré pour recevoir des premières informations d'indication provenant d'un dispositif terminal, dans lequel les premières informations d'indication sont utilisées pour indiquer si le dispositif terminal a la capacité de commander une fréquence d'envoi de paquets qui est définie comme un débit de transmission de paquets ; et
un module d'envoi (1220), configuré pour :
envoyer une fréquence d'envoi de paquets d'un flux à un dispositif de réseau d'accès, lorsque les premières informations d'indication indiquent que le dispositif terminal n'a pas la capacité de commander la fréquence d'envoi de paquets, et
envoyer la fréquence d'envoi de paquets d'un flux au dispositif terminal ou envoyer des troisièmes informations d'indication au dispositif de réseau d'accès, lorsque les premières informations d'indication indiquent que le dispositif terminal a la capacité de commander la fréquence d'envoi de paquets, dans lequel les troisièmes informations d'indication sont utilisées pour ordonner au dispositif de réseau d'accès d'envoyer la fréquence d'envoi de paquets au dispositif terminal.

8. Support de stockage informatique, dans lequel le support de stockage lisible par ordinateur stocke un code de programme qui, lorsqu'il est exécuté par un appareil de communication associé à un dispositif terminal, amène ledit appareil de communication à exécuter les étapes du procédé selon l'une quelconque des revendications 1 à 2, ou
un support de stockage informatique, dans lequel le support de stockage lisible par ordinateur stocke un code de programme qui, lorsqu'il est exécuté par un appareil de communication associé à un élément de réseau de commande, amène ledit appareil de communication à exécuter les étapes du procédé selon l'une quelconque des revendications 3 à 5.
